# EUROPÄISCHE PATENTSCHRIFT

(11) **EP 3 599 692 B1**
(45) Veröffentlichungstag und Bekanntmachung des Hinweises auf die Patenterteilung: **30.12.2020**
(21) Anmeldenummer: 18186058.6
(22) Anmeldetag: 27.07.2018
(51) Int. Cl.: H02J 3/34, H02M 5/14, H02M 5/27, H02M 1/00

(54) **VORRICHTUNG ZUR UMWANDLUNG ELEKTRISCHER ENERGIE MIT EINEM MATRIXCONVERTER UND SYSTEM ZUR BEREITSTELLUNG ELEKTRISCHER ENERGIE**
DEVICE FOR CONVERTING ELECTRICAL ENERGY WITH A MATRIX CONVERTER AND SYSTEM FOR PROVIDING ELECTRICAL ENERGY
DISPOSITIF DE CONVERSION D'ÉNERGIE ÉLECTRIQUE AVEC UN CONVERTISSEUR DE MATRICE ET SYSTÈME DE FOURNITURE D'ÉNERGIE ÉLECTRIQUE

(43) Veröffentlichungstag der Anmeldung: 29.01.2020
(73) Patentinhaber: GE Energy Power Conversion Technology Ltd., Warwickshire CV21 1BU (GB)
(72) Erfinder: BRANDT, Axel, 12277 Berlin (DE)
(74) Vertreter: Rüger Abel Patentanwälte PartGmbB

(56) Entgegenhaltungen:
- CH-A2- 704 586
- CN-B- 104 953 912
- SAMIR KOURO ET AL: "Recent Advances and Industrial Applications of Multilevel Converters", IEEE TRANSACTIONS ON INDUSTRIAL ELECTRONICS, IEEE SERVICE CENTER, PISCATAWAY, NJ, USA, Bd. 54, Nr. 8, 8. August 2010 (2010-08-08) , Seiten 2553-2580, XP011311023, ISSN: 0278-0046

## Beschreibung

Die vorliegende Erfindung betrifft allgemein eine Vorrichtung zur Umwandlung elektrischer Energie, ein System zur Bereitstellung elektrischer Energie und Verwendung einer derartigen Vorrichtung oder eines derartigen Systems zur Bereitstellung hoher Leistungen. Insbesondere betrifft die vorliegende Erfindung eine derartige Vorrichtung und ein derartiges System, die einen Matrixkonverter zur Umwandlung einer Mehrphasen-Wechselstromenergie einer Art, bspw. einer Frequenz und Größe, in eine Mehrphasen-Wechselstromenergie einer anderen Art, insbesondere einer anderen Frequenz und Größe, verwenden.

Stromrichter werden zur Umwandlung von Strömen und Spannungen für viele Anwendungen, wie bspw. zur Kopplung elektrischer Netze mit drehzahlvariablen Antrieben, zum Energieaustausch zwischen elektrischen Netzen, zur Frequenzumrichtung und dgl. verwendet. Hierzu sind Stromrichter in unterschiedlichen Schaltungstopologien bekannt. Für kleinere und mittlere Leistungen sind konventionelle Stromrichter in Zweipunkttechnik weit verbreitet, die einfache und robuste Lösungen bieten. Im Mittel- und Hochspannungsbereich werden häufig sog. Mehrpunktstromrichter eingesetzt, die mehrere Spannungsstufen erzeugen und die Spannungen auf höhere Niveaus bis in die MVA-Bereiche mit hinreichender Spannungsqualität erhöhen.

Für Hochleistungsanwendungen, wie bspw. für sehr leistungsstarke Antriebe oder zur Kopplung von Anwendungen oder elektrischen Versorgungsnetzen mit einem Hochspannungs-Wechselspannungsnetz, z.B. für Pumpspeicherkraftwerke unter Verwendung von Generatoren, Windkraftanlagen oder dgl., können auch sog. Back-to-Back-Stromrichtersysteme verwendet werden. Bei diesen wird zunächst in einer ersten Stufe aus einer bspw. dreiphasigen Wechselspannungsquelle (z.B. einem Netz im Falle eines Motors, einem Generator im Falle der Energieerzeugung) mittels eines Gleichrichters ein Gleichstrom oder eine gleichgerichtete Gleichspannung erzeugt, der bzw. die anschließend unter Verwendung eines Wechselrichters in einen Wechselstrom umgewandelt wird. Kondensatoren in dem Gleichspannungszwischenkreis zwischen dem Gleichrichter und dem Wechselrichter dienen als Energiespeicher und begrenzen Überschwingungsspitzen der Spannung in dem Gleichspannungszwischenkreis. Derartige Umrichter oder indirekte AC/DC/AC-Konverter sind auch aufgrund der Energiespeicher relativ aufwendig und kostspielig und haben einen geringeren Wirkungsgrad.

Für Hochleistungsanwendungen sind ferner modulare Mehrpunktstromrichter (Modular Multilevel Converter, MMC bzw. M2C) zunehmend verbreitet, die Phasenzweige bzw. -module aufweisen, die aus zwei in Reihe verbundenen Stromrichterzweigen bestehen. Jeder Stromrichterzweig ist aus einer Anzahl gleichartiger Zellen (Submodulen) aufgebaut, die jeweils durch eine Brückenschaltung mit ansteuerbaren Leistungshalbleiterschaltern und einem internen Kondensator gebildet sind. Die Kondensatoren der Submodule bilden dezentralisierte Gleichspannungszwischenkreiskondensatoren zur Zwischenspeicherung elektrischer Energie. Durch die modulare Bauweise sind derartige Stromrichter für unterschiedliche Leistungen und Anwendungen individuell skalierbar, wobei die Spannungen und Ströme auf der Wechselspannungs(AC)-Seite und der Gleichspannungs(DC)-Seite hochdynamisch und weitgehend entkoppelt voneinander gesteuert und geregelt werden können. Erkauft wird dies wiederum mit einem relativ hohen Aufwand und hohen Kosten für die Implementierung und den Betrieb und einem nur begrenzten Wirkungsgrad. Für eine AC-AC-Umwandlung müssen zwei derartige modulare Mehrpunktstromrichter in einer Back-to-Back-Konfiguration bspw. über Induktivitäten in dem Stromzwischenkreis miteinander gekoppelt werden.

Eine Möglichkeit zur direkten AC-AC-Wandlung wird durch einen sog. Matrixkonverter zur Verfügung gestellt, bei dem jede Phase einer Mehrphasenquelle, z.B. eines Generators oder Netzes, mit jeder Phase einer Mehrphasenlast, z.B. eines Netzes, einer passiven Last, eines Motors, etc., über einen bidirektionalen Schalter verbindbar ist. Die Schalter sind gewöhnlich durch zwei antiparallel geschaltete Thyristoren oder Reihenschaltungen von antiparallel geschalteten Thyristoren gebildet, um den differentiellen Spannungen zwischen den Phasen und den Phasenströmen standzuhalten und um eine Stromumkehr zu ermöglichen. Die Schalter sind bei n Phasen der Quelle und p Phasen der Last in einer (n x p)-Matrix angeordnet und können von einer Steuereinrichtung angesteuert werden, um die Phasen der Eingangswechselspannung jeweils abwechselnd mit den einzelnen Phasen der Last zu verbinden.

Ein derartiger Matrixkonverter ist bspw. aus der DE 100 51 222 A1 bekannt. Der Matrixkonverter verbindet in einer zeitlichen Abfolge sechs Phasen eines Generators als Quelle mit drei Phasen einer Last und weist hierzu 18 bidirektionale Schalter in Form von antiparallel geschalteten Thyristoren auf, die in einer (6 x 3)-Matrix angeordnet sind. Eine Steuereinrichtung überwacht den Schaltzustand der Schalter sowie Ströme und Spannungen der Phasen des Generators, um von einer Phase auf eine andere Phase möglichst dann umzuschalten, wenn eine bestimmte Bedingung für eine natürliche Kommutierung zwischen den Phasen erfüllt ist.

DE 10 2009 042 690 A1 beschreibt eine elektrische Schaltung zur Erzeugung elektrischer Energie mit einem n-phasigen Generator, einem Matrixkonverter und einem Transformator, an den eine p-phasige Last anschließbar ist. Es wird bspw. ein 27-phasiger Synchrongenerator mit einer polygonalen Ausbildung der Wicklungen verwendet, um 27 Phasen der Eingangswechselspannung bereitzustellen. Der Matrixkonverter ist in m Teilkonverter unterteilt, wobei jeder Teilkonverter p Blöcke aufweist, jeder der Blöcke n/m bidirektionale Schalter aufweist und die Schalter der einzelnen Blöcke symmetrisch mit dem Generator verbunden sind. Durch die symmetrische Verbindung der einzelnen Blöcke mit dem Generator können Stromspitzen und damit hohe Belastungen für die Schalter reduziert werden.

WO 2006/103155 A1 beschreibt eine Vorrichtung und ein Verfahren zur Umwandlung eines Mehrphasen-Wechselstroms in einen gewünschten mehrphasigen Ausgangs-Wechselstrom mit einem Generator, der den Mehrphasen-Wechselstrom zur Erzeugung elektrischer Energie aus mechanischer Energie zur Verfügung stellt, und einem Matrixkonverter, der jede der Phasen des Mehrphasen-Wechselstroms des Generators mit jeder von bspw. drei Ausgangswechselstromphasen verbindet. Der Generator weist einen Rotor und einen Stator auf, der in einer Ausführungsform deltaverbundene Wicklungen aufweist, die die Phasen des Mehrphasen-Eingangswechselstroms erzeugen. Es kann ein Generator mit hoher Phasenordnung mit 24 oder sogar mehr Phasen vorgesehen sein. Eine hohe Anzahl von Phasen ist von Vorteil, um eine Ausgangs-Wechselspannung hoher Güte mit möglichst geringen harmonischen Verzerrungen zu erzeugen. Um bei der hohen Anzahl der Generatorphasen die Anzahl der bidirektionalen Schalter des Matrixkonverters zu reduzieren, weist der Matrixkonverter wenigstens zwei Stufen auf, wobei in einer ersten Stufe des Konverters jede Phase des Mehrphasen-Wechselstroms des Generators durch einen steuerbaren bidirektionalen Schalter gesteuert wird und in einer weiteren Stufe des Matrixkonverters Gruppen von steuerbaren bidirektionalen Schaltern angeordnet sind, die jeweils mehrere parallele bidirektionale Schalter aufweisen, welche individuell mit jeder der Phasen des Ausgangs-Wechselstroms verbindbar sind.

Derartige Matrixkonverter mit einer hohen Phasenordnung haben sich in Anwendungen zur Energieerzeugung und -umwandlung grundsätzlich bewährt. Sie zeichnen sich durch geringen Aufwand und geringe Kosten für die Implementierung und den Betrieb sowie geringe Leistungsverluste aus, was hauptsächlich auf die Verwendung von Thyristoren, das Fehlen kapazitiver und induktiver Energiespeicherelemente und den Einsatz von nur einer oder wenigen Umwandlungsstufen zurückzuführen ist.

Allerdings benötigen derartige Matrixkonverter eine vielphasige Kommutierungsspannung, die durch spezielle mehrphasige Generatoren erzeugt wird, die diese Maschinen sehr speziell machen. Derartige Generatoren sind im Allgemeinen Synchrongeneratoren mit einer polygonalen Ausbildung der Statorwicklungen, die bspw. von einer Turbine angetrieben sein können, die unter Brennstoffeinsatz in Rotation versetzt wird und über eine direkte mechanische Kopplung zu dem Generator auch diesen in Drehung versetzt. Die Generatoren können auch anderweitig mechanisch angetrieben sein. Jedenfalls weisen derartige Generatoren mit der erforderlichen hohen Phasenordnung einen komplizierten und kostspieligen Aufbau auf, der auch die gesamte Komplexität der Energieerzeugungs- bzw. -umwandlungsvorrichtung und deren Anschaffungs- und Betriebskosten wesentlich vergrößert, was die Vorteile der Verwendung des Matrixkonverters teilweise zunichte macht. Es besteht ein Bedarf, die Komplexität und Kosten derartiger auf Matrixkonvertern basierender Energieerzeugungs- und -umwandlungsvorrichtungen zu optimieren.

CN 194 953 912 B offenbart ein System zur Bereitstellung elektrischer Energie mit einer dreiphasigen Wechselspannungsquelle, einer mehrphasigen Last in Form eines sechsphasigen Synchronmotors und einer Vorrichtung zur Umwandlung elektrischer Energie, die die Merkmale des Oberbegriffs des unabhängigen Anspruchs 1 aufweist. Die Vorrichtung weist zwei Phasenschiebetransformatoren und zwei Matrixkonverter auf. Jeder Phasenschiebetransformator weist eine Primärseite zur Verbindung mit einer 3-phasigen Wechselspannungsquelle und eine Sekundärseite auf, die eine Sekundärwechselspannung mit 6 Phasen abgibt. Jeder Matrixkonverter ist ein (6 x 3) - Matrixkonverter mit 6 Phaseneingängen, die an der Sekundärseite des jeweiligen Mehrphasen-Transformators angeschlossen sind, 3 Phasenausgängen, die mit 3 Phaseneingängen der Last verbunden sind, und einer (6 x 3) - Matrix von bidirektionalen Schaltern dazwischen. Eine Steuereinrichtung steuert den Betrieb der Vorrichtung durch Ansteuerung der bidirektionalen Schalter beider Matrixkonverter an, um die Sekundärwechselspannungen der Mehrphasen-Transformatoren in eine 6-phasige Ausgangswechselspannung für die Last umzuwandeln.

Samir Kuoro et al: "Recent Advances and Industrial Applications of Multilevel Converters", IEEE TRANSACTIONS ON INDUSTRIAL ELECTRONICS, IEEE SERVICE CENTER, PISCATAWAY; NJ; USA; Bd. 54, Nr. 8, August 2010, Seiten 2553-2580, untersuchen unterschiedliche Topologien von mehrstufigen Stromrichtern und offenbaren u.a. ein System mit einem Wechselspannungsnetz, einem Phasenschiebetransformator und einer Matrixkonverter-Leistungszellenanordnung. Der Phasenschiebetransformator weist eine Primärseite mit einer Dreieckschaltung von Primärwicklungen und einer Sekundärseite auf, die eine Vielzahle von Wicklungen in Dreieck- und in Zickzackschaltungen aufweist und mehrere isolierte und phasenverschobene dreiphasige sekundäre Wechselspannungsquellen bereitstellt. Die sekundären Wechselspannungsquellen sind mit der Last über Leistungszellen verbunden sind, die aus einem (3 x 2) - Matrixkonverter mit bidirektionalen Schaltern und zugehörigen dreiphasigen kapazitiven Eingangsfiltern bestehen. Die Matrixkonverter-Leistungszellen sind zu einer Matrix miteinander verschaltet und mit einer dreiphasigen Wechselstromlast verbunden.

CH 704 586 A2 beschreibt einen modularen bidirektionalen AC/AC-Konverter ohne Energiezwischenspeicher und offenbart einen 18-Pulstransformator, der mit einer dreiphasigen in Stern geschalteten Wicklung auf der Primärseite und neun von der Primärseite und untereinander galvanisch getrennten dreiphasigen Abgängen auf der Sekundärseite mit in Dreieck und Polygon geschalteten Wicklungen implementiert ist.

Ausgehend hiervon ist es eine Aufgabe der vorliegenden Erfindung, die vorstehend erwähnten Unzulänglichkeiten des Standes der Technik zu beseitigen und eine Vorrichtung zur Umwandlung elektrischer Energie sowie ein System zur Bereitstellung elektrischer Energie zu schaffen, die die Umwandlung oder Erzeugung elektrischer Wechselstromenergie mit einem optimierbaren, komplexarmen Aufbau, bei verringerten Kosten für deren Implementierung und Betrieb und mit geringen Leistungsverlusten während des Betriebs ermöglichen. Insbesondere sollten die Vorrichtung und das System zur Umwandlung von Spannungen und Strömen für Hochleistungsanwendungen, wie etwa große Antriebe, Netzkopplungen oder Frequenzrichter, bevorzugterweise an Hochspannungsnetzen, verwendbar sein.

Diese Aufgabe wird durch die Vorrichtung zur Umwandlung elektrischer Energie, insbesondere für Hochleistungsanwendungen, mit den Merkmalen des unabhängigen Anspruchs 1, das System zur Bereitstellung elektrischer Energie nach Anspruch 10 und die Verwendung einer derartigen Vorrichtung oder eines derartigen Systems nach Anspruch 12 gelöst. Besonders bevorzugte Ausführungsformen der Erfindung sind Gegenstand der abhängigen Ansprüche.

In einem ersten Aspekt der Erfindung ist eine Vorrichtung zur Umwandlung elektrischer Energie, insbesondere für Hochleistungsanwendungen, geschaffen, die einen Mehrphasen-Transformator und einen Matrixkonverter aufweist. Der Mehrphasen-Transformator weist eine Primärseite zur Verbindung mit einer m-phasigen Wechselspannungsquelle und eine mit der Primärseite magnetisch gekoppelte Sekundärseite auf, die eine Sekundärwechselspannung mit n Phasen abgibt oder erhält. Die Anzahl m der Phasen der Wechselspannungsquelle beträgt 3 oder mehr (m > 3), und die Anzahl der Phasen der Sekundärwechselspannung n ist größer als m (n > m). Der Matrixkonverter ist zur Verbindung der Sekundärseite des Mehrphasen-Transformators mit einer p-phasigen Last vorgesehen. Der Matrixkonverter weist eine Vielzahl von steuerbaren bidirektionalen Schaltern auf, die in einer Matrix angeordnet sind, die eingerichtet ist, um die n Phasen der Sekundärwechselspannung des Mehrphasen-Transformators jeweils abwechselnd mit den p Phasen der Last zu verbinden. Die Anzahl p der Phasen der Last ist dabei kleiner als die Anzahl n der Phasen der Sekundärwechselspannung (p < n). Die Vorrichtung weist ferner eine Steuereinrichtung zur Steuerung des Betriebs der Vorrichtung auf, die eingerichtet ist, um die steuerbaren bidirektionalen Schalter einzeln anzusteuern, um die n Phasen der Sekundärwechselspannung in eine Ausgangswechselspannung mit den p Phasen der Last umzuwandeln. Gemäß der Erfindung weist der Mehrphasen-Transformator Primärwicklungen, die durch sternverbundene und/oder dreieckverbundene Primärspulen gebildet und zum Anschluss an die m-phasige Wechselspannungsquelle, insbesondere ein m-phasiges Hochspannungsnetz, angepasst sind, und eine polygonale Sekundärwicklung auf, die mehrere in Reihe verbundene Sekundärspulen aufweist, die jeweils auf die Primärspulen verteilt und eingerichtet sind, um die n Phasen der Sekundärwechselspannung zur Verfügung zu stellen, wobei jede Phase der Sekundärwechselspannung aus einer Reihenschaltung von wenigstens zwei Sekundärspulen, die über verschiedenen Primärspulen angeordnet sind, abgeleitet ist

Die Erfindung basiert auf der Grundidee der Verwendung einer Kombination aus einem Mehrphasen-Transformator und einem Matrixkonverter, wobei der Mehrphasen-Transformator an ein mehrphasiges Netz, insbesondere ein Hochspannungsnetz, anschließbar ist und die Mehrphasen-Wechselspannung am Eingang des Matrixkonverters liefert, die dieser in die gewünschte mehrphasige Ausgangswechselspannung zur Speisung der Last umwandelt. Die Last kann eine passive Last, ein Antrieb mit einem leistungsstarken Motor oder ein bspw. über einen Transformator angekoppeltes mehrphasiges Energieversorgungsnetz sein. Die m-phasige Wechselspannungsquelle auf der Primärseite des Mehrphasen-Transformators kann insbesondere ein Hochspannungsnetz sein, das eine Spannung von 110 kV, 220 kV oder mehr liefern kann. Bei derartigen Hochspannungsnetzen ist ohnehin meist ein Netztransformator von Nöten, um die Spannung auf ein zur Verwendung für die Last geeignetes niedrigeres Niveau zu transformieren, so dass dieser Netztransformator gemäß der Erfindung zu dem Mehrphasen-Transformator modifiziert werden kann. Der Mehrphasen-Transformator ersetzt die in herkömmlichen Energieumwandlungsvorrichtungen auf Basis von Matrixkonvertern verwendeten speziellen Generatoren, die einen Turbinenantrieb oder Ähnliches erfordern und komplizierte und kostspielige Bauformen aufweisen, um die benötigte Eingangswechselspannung hoher Phasenordnung für den Matrixkonverter zu liefern. Der Aufwand für ein derartiges Generatorsystem kann durch den erfindungsgemäßen Mehrphasen-Transformator vermieden werden.

Der Mehrphasen-Transformator erfüllt vorteilhafterweise beide Funktionen der Ankopplung an ein Eingangsnetz und der Bereitstellung der Mehrphasen-Wechselspannung für den Matrixkonverter. Dadurch kann die Komplexität des Aufbaus der Vorrichtung deutlich verringert werden, was auch geringere Kosten für deren Implementierung und im Betrieb nach sich zieht. Der Matrixkonverter als solcher bietet zudem die Grundlage für geringe Leistungsverluste im Betrieb. Die Kombination aus dem Mehrphasen-Transformator und dem Matrixkonverter ermöglicht eine kundenspezifische Anpassung an die jeweilige Anwendung, bspw. ein Antriebssystem oder für eine Netzkopplung, und kann als Teil eines derartigen Systems optimiert werden. Die mehrphasige Wechselspannung, die durch den durch den Mehrphasen-Transformator kommutierten Matrixkonverter generiert wird, kann z.B. eine beliebige durch den Kunden bereitgestellte marktübliche Induktionsmaschine antreiben, und die Vorrichtung kann ein Teil des kundenspezifischen Prozesses und mit diesem gemeinsam optimiert sein.

In bevorzugten Anwendungen ist der Mehrphasen-Transformator zum Anschluss an eine dreiphasige Wechselspannungsquelle vorgesehen, die also m=3 Phasen aufweist, und die Ausgangs-wechselspannung der Last weist ebenso p=3 Phasen auf. Die Anzahl n der Phasen der Sekundärwechselspannung des Mehrphasen-Transformators beträgt dann 6 oder mehr. Vorzugsweise ist n ein ganzzahliges Vielfaches von p, was die Realisierung des Transformators erleichtert.

In besonders bevorzugten Ausführungsformen weist die Sekundärwechselspannung des Mehrphasen-Transformators 9, 12, 15, 18, 21, 24, 27 oder mehr Phasen auf. Eine hohe Phasenordnung des Mehrphasen-Transformators ermöglicht eine hohe Kommutierungsfrequenz zwischen den Phasen der Sekundärwechselspannung sowie innerhalb des Matrixkonverters, so dass eine Ausgangs-wechselspannung für die Last erzeugt werden kann, die vorteilhafterweise niedrigere Amplituden und höhere Frequenzen von unerwünschten Harmonischen aufweist, die leichter gehandhabt werden können.

In bevorzugten Ausführungsformen einer beliebigen vorstehend erwähnten Vorrichtung kann der Matrixkonverter vorteilhaferweise nur eine einzige Umwandlungsstufe mit einer (n x p)-Matrix von steuerbaren bidirektionalen Schaltern aufweisen. Eine einzige Umwandlungsstufe trägt zu einer Reduktion der Leistungs- und Kommutierungsverluste im Betrieb bei. Außerdem ermöglicht sie eine einfache Ansteuerung und hohe Kommutierungsfrequenzen im Inneren des Matrixkonverters.

Alternativ kann auch eine zweistufige Matrixkommutierung vorgesehen sein, wie sie z.B. in der eingangs erwähnten WO 2006/103155 A1 offenbart ist, deren Offenbarung in Bezug auf die zweistufige Konfiguration des Matrixkonverters hiermit durch Verweis mit aufgenommen ist. Eine derartige zweistufige Matrixkonverterkonfiguration kann die Anzahl der erforderlichen Schalter reduzieren, jedoch auf Kosten eines höheren Steuerungsaufwandes.

Als weitere Alternative können die Schalter auch zu Gruppen, Blöcken oder Teilumrichtern gruppiert sein, wie bspw. in der eingangs erwähnten DE 10 2009 042 690 A1 beschrieben, deren Offenbarung in Bezug auf die Konfiguration der Teilumrichter hiermit durch Verweis mit aufgenommen ist. Durch eine derartige Konfiguration können die Schalter der einzelnen Blöcke mit dem Mehrphasen-Transformator symmetrisch verbunden werden, um Stromspitzen und damit Belastungen für die Schalter des Matrixkonverters zu reduzieren.

Möglich ist auch eine Gruppierung der Schalter entsprechend der Zugehörigkeit zu den einzelnen Phasen, was eine einfache Schaltungstopologie mit einer übersichtlichen Anordnung der Schalter und einer einfachen, übersichtlichen Verschaltung ergibt.

In jeder beliebigen vorstehend erwähnten Vorrichtung können die bidirektionalen Schalter bevorzugterweise aus zwei gegensinnig parallel geschalteten Thyristoren aufgebaut sein. Derartige Thyristoren sind besonders kostengünstig und zuverlässig und zeichnen sich durch ein hohes Leistungsaufnahmevermögen aus. Es können aber auch andere Leistungshalbleiterschalter, wie bspw. IGBTs, IGCTs oder GTOs, verwendet werden.

Für höhere Sperrspannungen können zwei Reihenschaltungen von gegensinnig parallel geschalteten Thyristoren vorgesehen sein.

Erfindungsgemäß weist der Mehrphasen-Transformator Primärwicklungen auf, die durch sternverbundene und/oder dreieckverbundene (in Reihe verbundene) Primärspulen gebildet und zum Anschluss an die m-phasige Wechselspannungsquelle, insbesondere ein m-phasiges Hochspannungsnetz von bspw. 110 kV oder 220 kV, angepasst sind. Ferner weist der Mehrphasen-Transformator eine polygonale Sekundärwicklung auf, die mehrere in Reihe verbundene Sekundärspulen enthält, die jeweils auf die Primärspulen verteilt und eingerichtet sind, um die n Phasen der Sekundärwechselspannung zur Verfügung zu stellen, die um 360°/n zueinander phasenverschoben sind. Auch bei hoher Phasenordnung kann der Mehrphasen-Transformator mit einem relativ komplexarmen Aufbau geschaffen werden. In besonders bevorzugten Konfigurationen weist der Mehrphasen-Transformator sowohl sternals auch dreieckverbundene Primärspulen auf, was eine größere Anzahl an Phasen der Sekundärwechselspannung ermöglicht.

Zusätzlich ist erfindungsgemäß jede Phase der Sekundärwechselspannung aus einer Reihenschaltung von wenigstens zwei Sekundärspulen, die über verschiedenen Primärspulen angeordnet sind, abgeleitet. Diese Sekundärspulen sind vorzugsweise unmittelbar miteinander verbunden, so dass die entsprechende Phase der Sekundärwechselspannung einfach über den beiden benachbarten Sekundärspulen abgegriffen werden kann. Prinzipiell könnte bei zusätzlicher Verschaltung eine Phase der Sekundärwechselspannung auch durch eine Kombination von nicht direkt miteinander verbundenen Sekundärspulen abgeleitet werden. Es werden wenigstens zwei bevorzugt benachbarte Sekundärspulen verwendet, um die entsprechende Phase der Sekundärwechselspannung abzuleiten.

Insbesondere können die eine oder mehreren vorzugsweise benachbarten Sekundärspulen, die zu der Reihenschaltung für eine bestimmte Phase der Sekundärwechselspannung gehören, jeweils eine bestimmte Anzahl von Windungen und einen Wicklungssinn aufweisen, die in Bezug aufeinander und auf die Windungszahl und den Wicklungssinn der zugehörigen Primärspule passend ausgewählt sind, um über der Reihenverbindung der beiden Sekundärspulen eine bestimmte der Phasen der Sekundärwechselspannung zu erhalten bzw. abzugreifen. Das Windungsverhältnis bestimmt die Amplitude der jeweiligen Phase der Sekundärwechselspannung.

In vorteilhaften Realisierungsformen der zuletzt erwähnten Konfigurationen des Mehrphasen-Transformators einer beliebigen vorstehend erwähnten Vorrichtung kann der Mehrphasen-Transformator einen Kern mit einer zu der Anzahl m der Phasen der Wechselspannungsquelle doppelten Anzahl an Schenkeln aufweisen, wobei jeder Phase der Wechselspannungsquelle ein erster und ein zweiter Schenkel zugeordnet sein können, wobei um jeden Schenkel jeweils eine der Primärspulen herum gewickelt sein kann, die Primärspulen der ersten Schenkel aller Phasen der Wechselspannungsquelle sternförmig miteinander verbunden sein können, die Primärspulen der zweiten Schenkel aller Phasen der Wechselspannungsquelle in Reihe bzw. dreieckförmig miteinander verbunden sein können und um jede Primärspule herum mehrere Sekundärspulen gewickelt sind.

Zum Beispiel kann in besonders bevorzugten Ausführungsformen zum Anschluss an ein dreiphasiges Hochspannungsnetz ein Kern des Mehrphasen-Transformators mit sechs Schenkeln mit um jeden Schenkel gewickelten Primärspulen vorgesehen sein, wobei die Primärspulen jedes zweiten Schenkels sternverbunden und die anderen dreieck- bzw. deltaverbunden sein können. Dies ergibt sechs phasenverschobene Grundmagnetflüsse, die sich durch den Kern ausbreiten. Je nach der Anzahl der Sekundärspulen kann der Matrix-Transformator bspw. 24 (oder 27 oder mehr) Sekundärausgangsspannungen bzw. -phasen zur Verfügung stellen, die jeweils um bspw. 360°/24 = 15° (oder weniger) phasenverschoben sind. Jede Phase der Sekundärspannung wird aus einer Reihenschaltung zweier vorzugsweise benachbarter Sekundärspulen auf unterschiedlichen Schenkeln, über verschieden verschalteten Primärspulen abgeleitet, deren Wicklungsverhältnisse geeignet gewählt sind, um die jeweiligen Phasen der Sekundärspannung zu ergeben. Alle Sekundärspulen sind in Reihe miteinander verbunden und bilden eine Polygonwicklung.

In vorteilhaften Weiterbildungen einer beliebigen vorstehend erwähnten Vorrichtung kann der Mehrphasen-Transformator auf seiner Sekundärseite ferner eine Kompensations- und/oder Filterwicklung aufweisen, an die eine kapazitive oder induktive Blindleistungskompensationseinrichtung oder ein harmonisches Filter zur Kompensation von Oberschwingungen anschließbar ist. Der Mehrphasen-Transformator kann somit gleichzeitig mehrere Funktionen erfüllen: als Netztransformator dienen, um Spannungspegel zwischen Netz und Anwendung anzupassen, die Mehrphasen-Wechselspannung für den Matrixkonverter zur Verfügung stellen und als Schnittstelle für die Blindleistungskompensation und/oder die Kompensation von Oberschwingungen dienen.

Die Steuereinrichtung kann den Betrieb der Vorrichtung vorzugsweise auf der Basis gemessener Betriebsgrößen der Vorrichtung steuern. Hierzu können Sensormittel vorgesehen sein, die eine oder mehrere Betriebsgrößen erfassen, zu denen Sekundärströme und/oder Sekundärwechselspannungen (Phasen) auf der Sekundärseite des Mehrphasen-Transformators, an die Last gelieferte (oder von dieser erhaltene) Ausgangs-Wechselströme und/oder Ausgangs-Wechselspannungen und Zustände der bidirektionalen Schalter, und hierfür kennzeichnende Sensorsignale liefern. Die Steuereinrichtung kann eingerichtet sein, um die durch die Sensormittel generierten Sensorsignale entgegenzunehmen und die bidirektionalen Schalter des Matrixkonverters basierend auf den empfangenen Sensorsignalen und vorgegebenen Schaltschemata geeignet anzusteuern, um die Kommutierung zwischen den Phasen der Sekundärwechselspannung des Mehrphasen-Transformators sowie innerhalb des Matrixkonverters zu bewerkstelligen. Unter Berücksichtigung der momentanen Betriebsbedingungen können auch natürliche Kommutierungen der Schalter, bspw. Thyristoren, in dem Matrixkonverter berücksichtigt und gefördert werden, wodurch die Schaltverluste in dem Matrixkonverter weiter reduziert werden.

Gemäß einem weiteren Aspekt der Erfindung ist ein System zur Bereitstellung elektrischer Energie mit einer mehrphasigen Wechselspannungsquelle, insbesondere einem dreiphasigen Hochspannungsnetz, mit einer mehrphasigen, vorzugsweise dreiphasigen Last und mit einer Vorrichtung zur Umwandlung elektrischer Energie, wie vorstehend beschrieben, geschaffen. Die Vorrichtung ist über den Mehrphasen-Transformator an die mehrphasige Wechselspannungsquelle angeschlossen und über den Matrixkonverter mit der mehrphasigen Last verbunden, um diese mit mehrphasiger Wechselspannungs-Energie zu speisen.

Die Vorrichtung zur Umwandlung elektrischer Energie in dem vorstehend erwähnten System kann eine beliebige der vorstehend erwähnten Konfigurationen aufweisen, deren Vorteile auch dem System insgesamt zugutekommen.

Die Last kann eine Energiesenke und/oder Energiequelle sein, die aus einer passiven Last, einem Motor, einem Generator, einem Stromrichter und/oder einem Wechselspannungsnetz, z.B. einem gegebenenfalls über einen Transformator angeschlossenen Wechselspannungsversorgungsnetz, ausgewählt ist.

Jede beliebige vorstehend erwähnte Vorrichtung zur Umwandlung elektrischer Energie und jedes beliebige vorstehend erwähnte System zur Bereitstellung elektrischer Energie ist z.B. zur Bereitstellung hoher Leistungen im MW-Bereich für elektrische Antriebseinrichtungen oder -ketten, sog. Back-to-Back-Netzkupplungen oder 50Hz-60Hz-Frequenzumrichter, besonders geeignet verwendbar.

Weitere Einzelheiten von vorteilhaften Ausführungsformen der Erfindung ergeben sich aus der Zeichnung, der Beschreibung oder Unteransprüchen. In der Zeichnung sind lediglich zu Veranschaulichungszwecken Ausführungsbeispiele der Erfindung veranschaulicht, die diese in keiner Weise beschränken. Sofern möglich, werden in allen Zeichnungen die gleichen Bezugszeichen für die gleichen Elemente verwendet. Es zeigen:
Fig. 1 ein Blockschaltbild eines Systems zur Bereitstellung elektrischer Energie mit einer Vorrichtung zur Umwandlung elektrischer Energie gemäß einem Ausführungsbeispiel der Erfindung, in stark vereinfachter Übersichtsdarstellung;
Fig. 2 ein Schaltbild eines Ausführungsbeispiels einer elektrischen Schaltung einer Kombination aus einem Mehrphasen-Transformator und einem Matrixkonverter zur Verwendung für die Vorrichtung in dem System nach Fig. 1, in vereinfachter Darstellung;
Figuren 3a und 3b vereinfachte Darstellungen zur Veranschaulichung einer Ausführungsform des Mehrphasen-Transformators zur Verwendung in der Vorrichtung und dem System nach Fig. 1 und Fig. 2; und
Fig. 4 ein Zeigerdiagramm, das das durch den Mehrphasen-Transformator nach Fig. 1-3 generierte Mehrphasensystem mit den einzelnen Phasen der Sekundärwechselspannung des Mehrphasen-Transformators veranschaulicht, in vereinfachter Darstellung.

Es wird nun auf Ausführungsformen der Erfindung Bezug genommen, die in den Zeichnungen veranschaulicht sind. Es sollte verständlich sein, dass die in den Zeichnungen veranschaulichten Ausführungsformen lediglich beispielhaft sind und die Erfindung als solche nicht beschränken. Vielmehr sind die Ausführungsformen lediglich dazu gedacht, mögliche Ausführungsformen zu erläutern und den Fachmann zu befähigen, die Erfindung auszuführen. Es sollte ferner verständlich sein, dass in dem Bemühen, eine konzise Beschreibung möglicher Ausführungsformen zu liefern, gegebenenfalls nicht alle von dem Umfang der Erfindung umfassten Einzelheiten angegeben sein können.

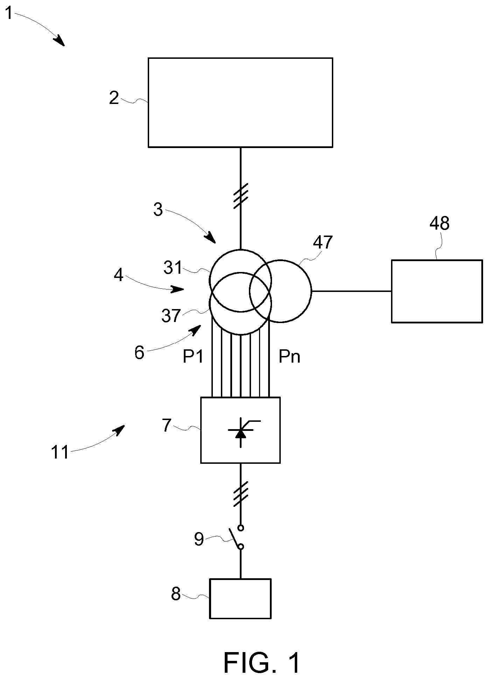

In Fig. 1 ist in einer stark vereinfachten Darstellung ein System 1 zur Bereitstellung elektrischer Wechselstrom(AC)-Energie veranschaulicht, das insbesondere für Hochleistungsanwendungen, bspw. zur Speisung von Antrieben mit großem, leistungsstarkem Motor, zur Ankopplung an ein elektrisches Energieverteilungsnetz oder dgl. verwendet werden kann. Das System 1 umfasst eine mehrphasige, hier bspw. dreiphasige Wechselspannungsquelle 2, die z.B. ein elektrisches Netz oder aber auch eine elektrische AC-Maschine, ein AC-Generator, eine Windkraftanlage oder dgl., sein kann. An die Wechselspannungsquelle 2 ist mit seiner Primärseite 3 ein Mehrphasen-Transformator 4 angeschlossen, dessen Sekundärseite 6 über einen Umrichter 7 mit einer hier nur schematisch dargestellten Last 8 verbunden ist. Ein Netztrennschalter 9 kann zwischen dem Umrichter 7 und der Last 8 geschaltet sein, um die Last 8 bedarfsweise von der Wechselspannungsquelle 2 trennen zu können. Der Netztrennschalter 9 könnte auch zwischen der Wechselspannungsquelle 2 und dem Mehrphasen-Transformator 4 angeordnet sein.

Die Wechselspannungsquelle 2 kann ein Hochspannungs(HV)-Netz sein, das eine Hochspannung von bspw. 220 kV oder 110 kV oder eine andere Spannung vorzugsweise im kV-Bereich liefert. Das HV-Netz 2 ist vorzugsweise ein Dreiphasennetz, wobei die Anzahl m der Phasen des HV-Netzes bzw. der Wechselspannungsquelle 2 auch größer als 3 sein kann.

Der Mehrphasen-Transformator 4 und der Umrichter 7 bilden in Kombination miteinander eine Vorrichtung 11 zur Umwandlung elektrischer Energie, die z.B. dazu dient, die von der Wechselspannungsquelle 2 bereitgestellte Hochleistungs-Wechselspannungsenergie in eine zur Speisung der Last 8 geeignete Wechselspannungsenergie umzuwandeln. Die Last 8 ist bspw. ein drehzahlvariabler Antrieb großer Leistung, insbesondere ein dreiphasiger Elektromotor, der ein Induktionsmotor, ein Permanentmagnetmotor, ein Synchronreduktanzmotor oder dgl. sein kann. Der Elektromotor 8 könnte auch als Generator betreibbar sein, wobei dann die durch den Generator 8 generierte elektrische Energie über die Vorrichtung 11 in ein zur Einspeisung in das Netz 2 geeignetes Mehrphasensystem umgewandelt wird. Die Vorrichtung 11 kann somit die Umwandlung elektrischer Energie und einen Energiefluss in beide Richtungen ermöglichen.

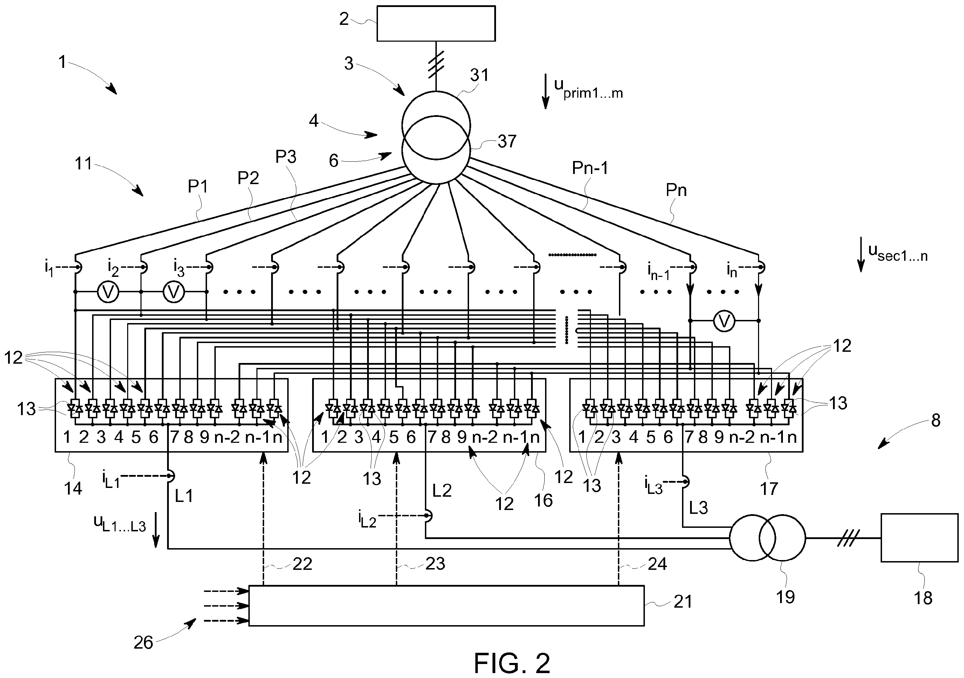

Die Last 8 könnte auch bspw. ein mehrphasiges, insbesondere dreiphasiges Wechselspannungsnetz sein, das auch über einen Anpassungstransformator an die Vorrichtung 11 angeschlossen sein kann (vgl. auch Fig. 2). Prinzipiell kann die Last eine beliebige, auch passive Vorrichtung sein, die insbesondere eine hohe Leistung benötigt oder abgibt. Die Last kann bevorzugt dreiphasig sein, wobei jedoch die Anzahl p der Phasen der Last nicht darauf beschränkt ist und auch weniger oder mehr als 3 betragen kann.

Der Mehrphasen-Transformator 4 dient dazu, die Wechselspannung und den Wechselstrom, die durch die Wechselspannungsquelle 2 bereitgestellt werden, in eine geeignete mehrphasige Wechselspannung und einen mehrphasigen Wechselstrom umzuwandeln und an dem Eingang (bzw. primärseitigen Anschluss) des Umrichters 7 bereitzustellen. Die Primärseite 3 des Mehrphasen-Transformators 4 ist in üblicher Weise mit der Sekundärseite 6 magnetisch gekoppelt, die eingerichtet ist, um eine Sekundärwechselspannung und einen Wechselstrom mit n Phasen zu generieren. Die Anzahl n der Phasen der Sekundärwechselspannung des Mehrphasen-Transformators 4 ist größer, vorzugsweise deutlich größer als die Anzahl m der Phasen der Wechselspannungsquelle 2 und die Anzahl p der Phasen der Last 8. Bspw. kann bei einer dreiphasigen Wechselspannungsquelle 2 und einer dreiphasigen Last 8 die Sekundärwechselspannung des Mehrphasen-Transformators 4 wenigstens 6 Phasen aufweisen. Wenn die Phasenanzahl n ein ganzzahliges Vielfaches der Anzahl p der Phasen der Last 8 ist, kann die Komplexität des Aufbaus des Mehrphasen-Transformators 4 reduziert werden. In bevorzugten Ausführungsformen für eine dreiphasige Last 8 kann der Mehrphasen-Transformator eine Sekundärwechselspannung mit 6, 9, 12, 15, 18, 21, 24, 27 oder mehr Phasen liefern. Eine hohe Phasenordnung des Mehrphasen-Transformators unterstützt eine Reduktion der harmonischen Verzerrungen in der durch den Umrichter 7 erzeugten Ausgangswechselspannung für die Last 8. Die einzelnen Phasen der Sekundärwechselspannung des Mehrphasen-Transformators 4 sind in Fig. 1 und Fig. 2 mit P1, ..., Pn bezeichnet.

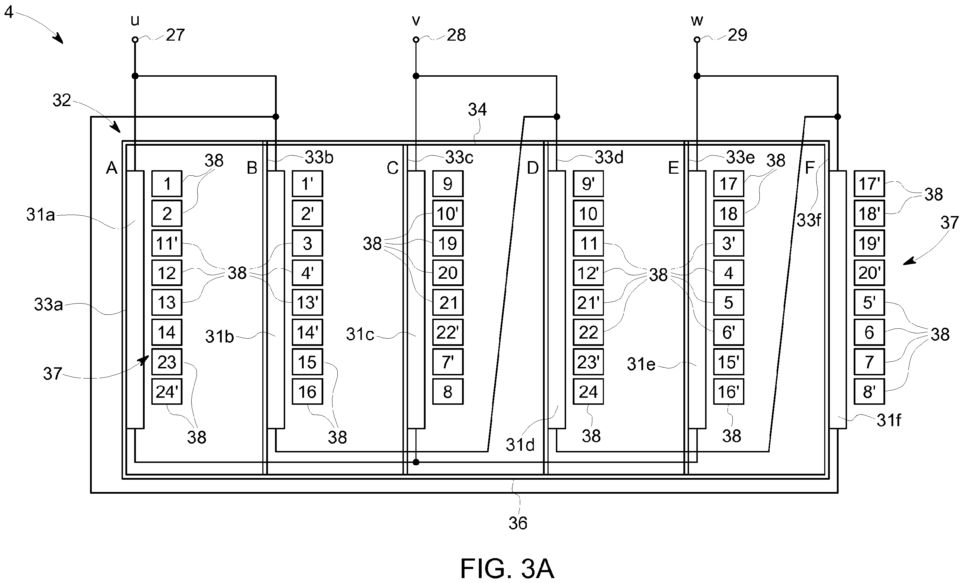

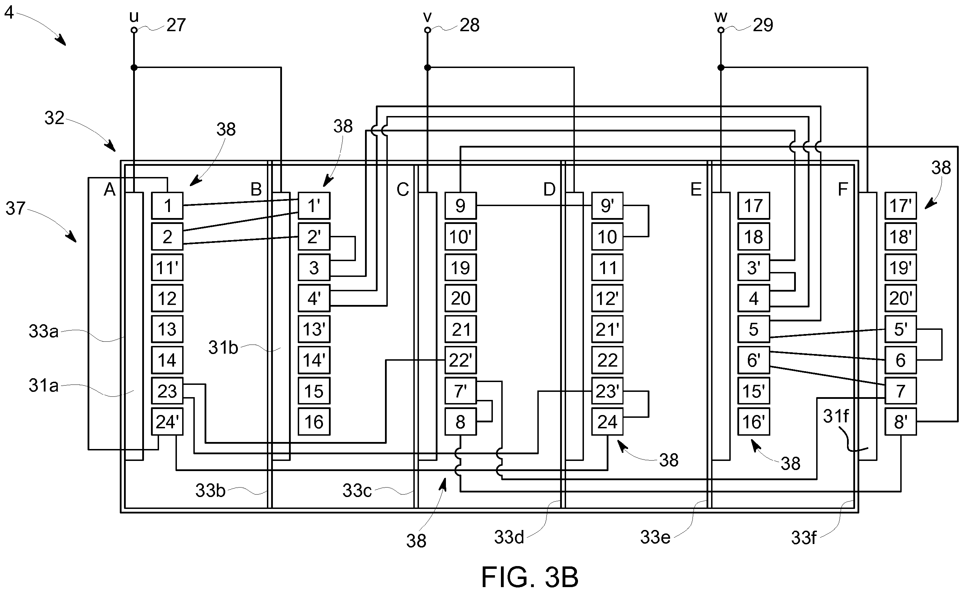

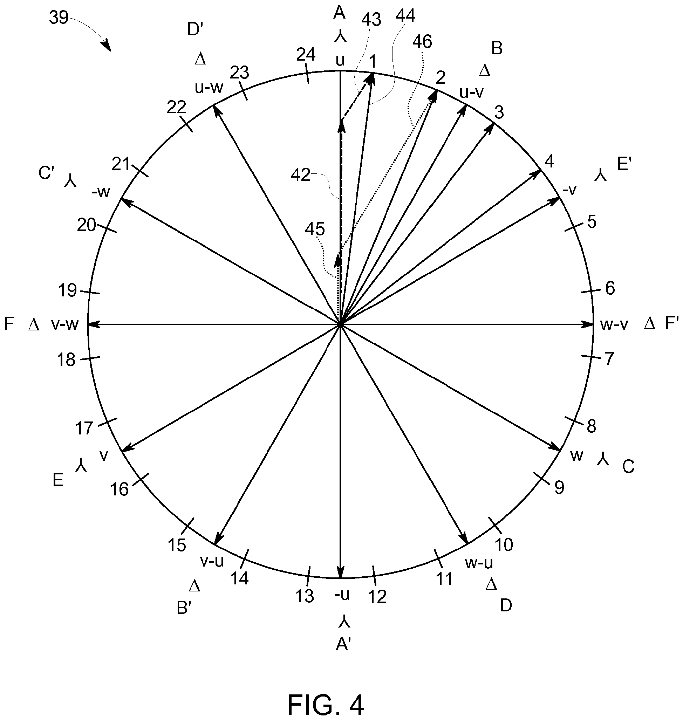

Weitere Einzelheiten zum Aufbau und zur Funktionsweise des Mehrphasen-Transformators 4 sind nachstehend im Zusammenhang mit den Figuren 3 und 4 angegeben.

Fig. 2 zeigt ein Schaltbild des Systems 1 nach Fig. 1 mit dem Mehrphasen-Transformator 4 und dem Umrichter 7 gemäß einem ersten Ausführungsbeispiel unter Veranschaulichung deren Konfiguration und elektrischer Verschaltung in größerem Detail.

Der Umrichter 7 ist hier speziell ein Matrixkonverter, der eine direkte Spannungs- und Frequenzumrichtung zwischen der Sekundärwechselspannung U_{sec1...n} des Mehrphasen-Transformators 4 und der Ausgangswechselspannung U_{L1}...U_{L3} der Last 8 in einer Matrix durchführt. Insbesondere weist der Matrixkonverter 7 eine Vielzahl von steuerbaren bidirektionalen Schaltern 12 auf, die in einer (n x p)-Matrix angeordnet sind, um die n Phasen P1, P2,... Pn der Sekundärwechselspannung U_{sec1...n} des Mehrphasen-Transformators 4 wahlweise mit einer der Ausgangsphasen L1, L2, ... Ln der Ausgangswechselspannung U_{L1...Lp} zu verbinden.

Um sowohl positive als auch negative Halbschwingungen schalten zu können, ist jeder bidirektionale Schalter 12 durch antiparallel geschaltete Schaltelemente 13 gebildet. Die Schaltelemente 13 sind hier vorteilhafterweise Thyristoren, die wegen ihrer hohen Leistungsaufnahmekapazität von Vorteil und relativ kostengünstig sind. Es könnten aber auch andere Leistungshalbleiterschaltelemente, wie bspw. IGBTs, IGCTs oder GTOs, bedarfsweise eingesetzt werden.

Um hohe Sperrspannungen für die hier vorgesehenen Hochleistungsanwendungen zu schaffen, sind vorzugsweise mehrere derartige Thyristoren in Reihe zueinander geschaltet, so dass jeder bidirektionale Schalter 12 vorzugsweise zwei Reihenschaltungen 13 von gegensinnig parallel geschalteten Thyristoren aufweist.

Die Schalter 12 des Matrixkonverters 7 sind hier in drei Gruppen 14, 16, 17 gruppiert. Jede Gruppe 14, 16, 17 ist einer der Phasen L1, L2, ... Lp der Last 8 zugeordnet. Wenngleich hier drei Gruppen 14, 16, 17 der Schalter 12 für die drei Phasen L1, L2, L3 der Last 8 veranschaulicht sind, versteht es sich, dass bei einer anderen Anzahl p der Lastphasen eine entsprechend andere Anzahl von Gruppen 14, 16, 17 vorgesehen sein würde.

Jede Gruppe 14, 16, 17 weist n bidirektionale Schalter 12 auf, wobei die aufeinanderfolgenden Schalter 12, die in den Blöcken 14, 16, 17 mit 1, 2, ... n nummeriert sind, jeweils mit um eine Phase unterschiedlichen Phasen Pi (i=1...n) des Mehrphasen-Transformators 4 verbunden sind. Insofern sind die in Fig. 2 mit 1, 2, 3 ... n bezeichneten Schalter 12 jeder Gruppe 14, 16, 17 entsprechend mit der Phase P1, P2, P3 ... Pn der Sekundärwechselspannung U_{sec1...n} des Mehrphasen-Transformators 4 gemeinsam verbunden.

Ausgangsseitig sind die mit 1, 2, ... n bezeichneten Schalter 12 zusammengeschaltet und mit der jeweiligen Lastphase L1, L2, ... Ln-1 bzw. Ln verbunden. In dem in Fig. 2 beispielhaft dargestellten Fall einer dreiphasigen Last sind die Schalter 12 der Gruppe 14 mit der Phase L1 der Last 8 gemeinsam verbunden, während die Schalter 12 der Gruppe 16 bzw. 17 miteinander und mit der Phase L2 bzw. L3 der Last 8 verbunden sind.

Die Last 8 ist hier beispielhaft in Form eines Energieverteilungs- oder -versorgungsnetzes 18 dargestellt, das über einen Anpassungstransformator 19 und die Phasenleitungen L1, L2, L3 mit dem Matrixkonverter 7 verbunden ist. Die Last könnte alternativ z.B. ein leistungsstarker Antrieb sein.

Eine Steuereinrichtung 21 ist dazu vorgesehen, den Betrieb der Vorrichtung 11 und des Systems 1 zu steuern. Insbesondere ist die Steuereinrichtung 21 dazu eingerichtet, die steuerbaren bidirektionalen Schalter 12 einzeln anzusteuern, um die n Phasen P1, P2, ... Pn der Sekundärwechselspannung U_{sec1...n} des Mehrphasen-Transformators 4 in die jeweiligen p Phasen L1, L2,... Lp der Ausgangswechselspannung U_{L1...Lp} der Last 8 umzuwandeln. Hierzu ist die Steuereinrichtung 21 mit jedem Schalter 12 des Matrixkonverters 7 über eine Steuerleitung verbunden, um die Schalter 12 individuell ansteuern zu können. In Fig. 2 sind die einzelnen Steuerleitungen der Übersichtlichkeit wegen nicht als solche dargestellt, sondern lediglich durch gestrichelte Pfeile 22, 23, 24 angedeutet, die aus der Steuereinrichtung 21 heraustreten und zu den jeweiligen Gruppen bzw. Blöcken 14, 16, 17 von Schaltern 12 des Matrixkonverters 7 führen.

Die Steuereinrichtung 21 ist dazu vorgesehen, den Betrieb der Vorrichtung 11 auf der Basis der momentanen Betriebsbedingungen bzw. Parametern zu steuern. Die aktuellen Betriebsgrößen werden von hier nicht näher dargestellten Sensormitteln im Betrieb laufend gemessen bzw. aus den durch die Sensormittel gelieferten Sensorsignalen ermittelt. In Fig. 1 sind der Übersichtlichkeit wegen Messpfade lediglich durch gestrichelte Pfeile 26 angedeutet, die in die Steuereinrichtung 21 eintreten. Es können bspw. die Phasenspannungen und/oder die Phasenströme der Phasen P1, P2, ...Pn der Sekundärwechselspannung U_{sec1...n}, die an die Last 8 gelieferten Ausgangs-Wechselströme und/oder Ausgangs-Wechselspannungen U_{L1, ...Lp} gemessen werden. Es können auch die Zustände der Schalter 12 bspw. anhand der durch diese fließenden Ströme überwacht und als zugehörige Sensorsignale an die Steuereinrichtung 21 übermittelt werden.

Die Steuereinrichtung 21 nimmt dann die Sensorsignale entgegen und steuert die bidirektionalen Schalter 12 des Matrixkonverters 7 basierend auf den Sensorsignalen geeignet an, um ausgehend von den Phasen P1, P2, ... Pn der Sekundärwechselspannung des Mehrphasen-Transformators 4 die jeweiligen Phasen L1, L2, ... Lp der Ausgangwechselspannung zur Speisung der Last 8 zu erzeugen. Die Steuereinrichtung 21 kann den Matrixkonverter 7 auch für einen Energiefluss in umgekehrte Richtung betreiben. Dazu steuert die Steuereinrichtung 21 die Schalter 12 auf der Basis der momentanen Betriebsbedingungen bzw. Parameter geeignet an, um ausgehend von einer dann als Energiequelle fungierenden Last 8, bspw. dem Energieversorgungsnetz 18, einem elektrischen Generator, einem Windkraftwerk oder dgl., eine mehrphasige Wechselspannung auf der Sekundärseite 6 des Mehrphasen-Transformators 4 zu liefern, die durch den Mehrphasen-Transformator 4 in eine zur Einspeisung in das HV-Netz 2 geeignete mehrphasige Wechselspannung transformiert wird.

Der Mehrphasen-Transformator 4 ist hier eingerichtet, um eine mehrphasige Wechselspannung U_{sec1...n} mit hoher Phasenordnung n zum Betreiben des Matrixkonverters 7 zu liefern bzw. von diesem zu erhalten. Eine hohe Phasenordnung unterstützt vorteilhafterweise eine Reduktion der harmonischen Verzerrungen bspw. der generierten Ausgangswechselspannung U_{L1...Lp} der Last 8 bzw. Netzspannung. Ein Beispiel für eine Konfiguration des Mehrphasen-Transformators 4, der 24 Sekundärausgangswechselspannungsphasen generieren kann, ist in den Figuren 3a und 3b in schematisierter Weise dargestellt, um das Prinzip zu veranschaulichen.

Bezugnehmend auf die Figuren 3a und 3b weist der Mehrphasen-Transformator 4 in der dargestellten beispielhaften Ausführungsform eine dreiphasige Primärseite 3 und eine 24-phasige Sekundärseite 6 auf. Die Primärseite 3 weist drei Primäranschlüsse 27, 28, 29 auf, die zur Verbindung mit der hier dreiphasigen Wechselspannungsquelle 2, z.B. einem HV-Dreiphasennetz, dienen. Die einzelnen Phasen des Dreiphasensystems der Wechselspannungsquelle 2 sind hier mit den Buchstaben u, v, w bezeichnet. Die Primärseite 3 des Mehrphasen-Transformators 4 weist ferner Primärwicklungen 31a...31f auf, wobei hier eine in Bezug auf die Anzahl der Phasen der Wechselspannungsquelle 2 doppelte Anzahl an Primärwicklungen 31a-31f vorgesehen ist. Die Primärwicklungen 31a, 31b sind mit dem ersten Primäranschluss 27 verbunden, der der Phase u der Quellenspannung der Wechselspannungsquelle 2 zugeordnet ist, während die Primärwicklungen 31c, 31d mit dem zweiten Primäranschluss 28 verbunden sind, der der Phase v der Quellenspannung zugeordnet ist, und die Primärwicklungen 31e, 31f mit dem dritten Primäranschluss 29 verbunden sind, der der Phase w der Quellenspannung der Wechselspannungsquelle 2 zugeordnet ist.

Die Primärwicklungen 31a-31f sind auf der von den Anschlüssen 27-29 abgewandten Seite unterschiedlich miteinander verschaltet. Insbesondere sind die Primärwicklungen 31a-31f abwechselnd entweder stern- oder dreieckverbunden. Wie aus Fig. 3a ersichtlich, sind die Primärwicklungen 31a, 31c, 31e hier sternverbunden, während die anderen Primärwicklungen 31b, 31d, 31f in Reihe miteinander verbunden bzw. dreieckverbunden sind. Dadurch können die sternverbunden Primärwicklungen 31a, 31c, 31e drei um 120° zueinander phasenverschobene Magnetflüsse erzeugen, während die dreieckverbunden Primärwicklungen 31b, 31d, 31f Magnetflüsse erzeugen, die um 120° zueinander phasenverschoben und auch gegenüber den Magnetflüssen der sternverbundenen Primärwicklungen 31a, 31c, 31e phasenverschoben sind.

Die Primärwicklungen bzw. -spulen 31a-31f können bspw. aus Kupferdraht gewickelt und auf einem gemeinsamen Magnetkern 32 des Mehrphasen-Transformators 4 angeordnet. Der Kern 32 ist aus einem Material hoher magnetischer Permeabilität, bspw. aus einer Eisenlegierung oder einem ferromagnetischen Stahl, ausgebildet, um im Betrieb durch das durch die Primärwicklungen 31a-31f erzeugte Magnetfeld fortdauernd magnetisiert und entmagnetisiert zu werden. Der Kern 32 kann zur Reduzierung von Wirbelstromverlusten aus einem Stapel aus einzelnen Blechen aufgebaut sein.

In der in den Figuren 3a und 3b dargestellten Ausführungsform weist der Kern 32 hier sechs Schenkel 33a-33f auf, die im Wesentlichen parallel zueinander in einer gemeinsamen Ebene angeordnet und an den entgegengesetzten Enden über zwei Joche 34, 36 miteinander verbunden sind. Die Primärspulen 31a-31f sind einzeln über jeweils einem einzelnen der Schenkel 33a-33f gewickelt, wobei insbesondere die Primärspule 31a über dem Schenkel 33a, die Primärspule 31b über dem Schenkel 33b, usw., und die Primärspule 31f über dem Schenkel 33f gewickelt ist. In den Figuren 3a und 3b sind der Übersichtlichkeit wegen nur Halbschnitte der Primärspulen 31a-31f an den Schenkeln 33a-33f dargestellt.

Der Mehrphasen-Transformator 4 enthält ferner eine Sekundärwicklung 37, die ebenfalls an dem Kern 32 angeordnet ist. Die Sekundärwicklung 37 ist hier eine Polygonwicklung, die durch eine Vielzahl in Reihe miteinander verbundener Sekundärspulen 38 gebildet ist, die jeweils auf die Schenkel 33a-33f verteilt und über den jeweiligen Primärspulen 31a-31f abschnittsweise gewickelt sind. Die Sekundärspulen 38 sind wie die Primärspulen 31a-31f ebenfalls aus einem leitfähigen Material, bspw. Kupferdraht, gebildet. Wenn der Transformator erregt ist, erzeugt ein durch die Primärwicklungen fließender Wechselstrom ein sich entsprechend änderndes Magnetfeld, das sich durch die Primärwicklungen, den Kern und anschließend durch die Sekundärwicklungen ausbreitet. Dieses wechselnde Magnetfeld induziert eine entsprechende Spannung über den Sekundärspulen 38, so dass wenn die Sekundärwicklung 37 mit einer Last 8 verbunden ist, ein komplementärer Strom durch die Sekundärwicklung 37 und die Last 8 fließt. Die Primärwicklungen 31a-31f und die Sekundärwicklung 37 sind durch elektromagnetische Induktion miteinander verbunden und ermöglichen es, dass elektrische Energie von einer Wicklung auf die andere übertragen werden kann. In Abhängigkeit von dem Wicklungsverhältnis zwischen den Primärspulen 31a-31f und den Sekundärspulen 38 können Spannungen unterschiedlicher Amplituden an den Sekundärspulen 38 induziert werden.

In dem Ausführungsbeispiel gemäß den Figuren 3a und 3b wird jede Phase P1, P2, ... Pn der Sekundärwechselspannung des Mehrphasen-Transformators 4 aus einer Reihenschaltung von zwei Sekundärspulen 38 abgeleitet, die über verschiedenen Primärspulen 31a-31f angeordnet sind. Insofern sind hier doppelt so viele Sekundärspulen 38 vorgesehen, wie die Anzahl n der Phasen P1-Pn der Sekundärwechselspannung des Mehrphasen-Transformators 4 vorhanden sind. In dem dargestellten Beispiel mit 24 Phasen der Sekundärwechselspannung sind insgesamt 48 Sekundärspulen 38 vorgesehen, die in den Figuren 3a und 3b der Einfachheit wegen paarweise mit 1, 1, 2, 2', 3, 3', ..., 24, 24' fortlaufend nummeriert sind. Die Sekundärspulen 38 sind in der aufsteigenden Reihenfolge, also von 1 zu 1', dann zu 2 und 2', 3-3', usw., bis zu 24-24' und zurück zu 1 in Reihe miteinander (dreieck- oder deltaförmig) verbunden, um die Polygonwicklung zu bilden. Dies ist zu Veranschaulichungszwecken in Fig. 3b gesondert abschnittsweise angezeigt. Die einzelnen Sekundärspulen 38 sind jeweils über nur einem Abschnitt einer jeweiligen Primärspule 31a-31f bspw. übereinander und im Abstand zueinander angeordnet und gegeneinander sowie gegen die Primärspulen 31a-31f elektrisch isoliert.

Die Sekundärspulen 38, die durch die gleiche Zahl mit und ohne Apostroph gekennzeichnet sind, wie bspw. 1 und 1', 2 und 2', usw., sind unmittelbar miteinander verbunden und bilden jeweils die Reihenschaltung, über der die jeweilige Phase P1, P2, P3, ..., Pn (hier P24) der Sekundärwechselspannung U_{sec1...n} abgegriffen wird. Die Anzapfungen sind in Fig. 3a der Übersichtlichkeit wegen nicht näher dargestellt.

Die Sekundärspulen 38 sind über den Schenkeln 33a-33f und den Primärspulen 31a-31f derart geeignet verteilt angeordnet, dass über den jeweiligen Reihenschaltungen von zwei benachbarten Sekundärspulen 38 jeweils eine bestimmte der Phasen P1, P2, ..., Pn der Sekundärwechselspannung erhalten wird, wobei die Phasen um 360°/n, im vorliegenden Beispiel um 360°/24 = 15°, zueinander phasenverschoben sind. Die Amplitude der Phasen P1, P2, ... Pn der Sekundärwechselspannung U_{sec1...n} des Mehrphasen-Transformators 4 wird durch geeignete Wahl der Windungszahlen der Sekundärspulen 38, die zu einem einer bestimmten Phase zugeordneten Spulenpaar gehören, in Bezug aufeinander und in Bezug auf die zugehörigen Primärspulen 31a-31f eingestellt.

Fig. 4 zeigt ein beispielhaftes Zeigerdiagramm 39, das die einzelnen Zeiger (Vektoren) für die Phasen u, v, w der Wechselspannungsquelle 2 und die resultierenden Phasenspannungen P1, P2, ... P24 des beispielhaften Mehrphasen-Transformators 4 nach Fig. 3 zur Veranschaulichung der Funktionsweise desselben darstellt. Die Phasen u, v, w stellen das Dreiphasensystem der Wechselspannungsquelle 2 dar, die als die Phasen U_{prim1...3} über den sternförmig miteinander verbundenen Primärspulen 31a, 31c, 31e anliegen. Die Phasen u, v, w sind um 120° zueinander phasenverschoben und in Fig. 4 entsprechend als um 120° in Umfangsrichtung voneinander beabstandete Zeiger dargestellt. Der Zeiger der Phase u zeigt dabei in die Zwölf-Uhr-Richtung. Die zugehörigen Primärflüsse A-F, die sich in den Schenkeln 33a-33f des Kerns 32 ergeben, sind ebenso wie die entsprechenden Symbole für die Verschaltung der Primärspulen 31a-31f, also dreieckförmig oder sternförmig, mit eingetragen.

Ferner sind die Zeiger der resultierenden Phasenspannungen P1, P2, ... P24 teilweise dargestellt (wobei der Übersichtlichkeit wegen meist nur die jeweiligen Zahlen 1 bis 24 eingetragen sind), die sich an den jeweiligen Reihenschaltungen der benachbarten Sekundärspulen 38 ergeben, die als Paare 1-1', 2-2', ..., 24-24' einer bestimmten Phase der Sekundärwechselspannung zugeordnet sind. Der Einfachheit halber wird angenommen, dass die Amplitude der Phasen P1-P24 der Sekundärwechselspannung U_{sec1...24} mit der Amplitude der Primärspannung U_{prim1...3} (u, v, w) übereinstimmt bzw. in Fig. 4 entsprechend normiert ist.

Die Phasen P1-P24 der Sekundärwechselspannung U_{sec1-24} tragen in Fig. 4 jeweils die Zahl, die der Zahl des Paars Sekundärspulen 38 (in den Fig. 3a und 3b) entspricht, über denen die jeweilige Phase abgegriffen wird. Diese Phasen P1-P24 sind aufeinanderfolgend jeweils um 15° zueinander phasenverschoben. Die erste Phase P1 wird über dem Paar 1-1' der Sekundärspulen 38 abgegriffen, die über den Primärspulen 31a bzw. 31b gewickelt sind. In der mit 1 bezeichneten Sekundärspule 38 wird eine Spannung induziert, die mit der Spannung u (Primärfluss A) in Phase ist und in Fig. 4 durch einen gestrichelten Zeiger 42 dargestellt ist. In der mit 1' bezeichneten Sekundärspule 38 wird eine entsprechend phasenverschobene Spannung induziert, die in Fig. 4 durch den weiteren gestrichelten Zeiger 43 dargestellt ist und die mit der Spannung der Primärspule 31b u-v (Primärfluss B) in Phase ist und gegenüber der Spannung u um 30° phasenverschoben ist. Die Summe der beiden Zeiger 42, 43 ergibt die in dem Zeigerdiagramm nach Fig. 4 mit 1 bezeichnete erste Phase P1 der Sekundärwechselspannung (resultierender Zeiger 44).

Entsprechend wird die zweite Phase P2 der Sekundärwechselspannung durch Summation der Sekundärspannungen erhalten, die in der Sekundärwicklung 2 (über der Primärwicklung 31a; Primärspannung u; Primärfluss A) und 2' (über der Primärwicklung 31b; Primärspannung u-v; Primärfluss B) erhalten wird, von denen die Zeiger 45, 46 zur Veranschaulichung in Fig. 4 punktiert eingetragen sind. Wie ersichtlich, weist die Spule 2 eine kleinere Windungsanzahl als die Spule 1 auf, während die Spule 2' ein größeres Windungsverhältnis als die Spule 1' aufweist, um die geeignete Amplitude und Phasenlage für die Phase P2 zu erhalten.

Die weiteren mit 3, 4, ... 24 in Fig. 4 bezeichneten Phasen P3, P4, P24 der Sekundärwechselspannung U_{sec1...24} des Mehrphasen-Transformators 4 werden in entsprechender Weise durch Summation (Vektorsumme) der jeweils in den zugehörigen Spulenpaaren 3, 3', 4, 4', etc. induzierten Sekundärspannungen erhalten, wenn deren Wicklungssinn und Windungsanzahl passend in Bezug aufeinander und auf diejenigen der zugehörigen Primärspulen 31a-31f gewählt werden. Um weitere Beispiele anzugeben, und wie weiter aus den Figuren 3 und 4 entnehmbar, werden z.B. die Phasen P3, P4 durch Induktion aus den Primärspannungen -v (Primärfluss E' = -E) und u-v (Primärfluss B) erhalten, die Phasen P5, P6 aus den Primärspannungen -v (Primärfluss E' = -E) und w-v (Primärfluss F' = - F) erhalten, usw., und die Phasen P23, P24 werden durch Induktion aus den Primärspannungen u-w (Primärfluss D' = -D) und u (Primärfluss A) erhalten.

Somit generiert der Mehrphasen-Transformator 4 die erforderlichen um 360°/n (hier 15°) verschobenen Phasen P1, P2, P3, ... Pn (hier P24) der Sekundärspannung U_{sec1...n} auf seiner Sekundärseite 6. Der Matrixkonverter 7 wandelt dann die Phasen P1, P2, ... Pn unter der Steuerung durch die Steuereinrichtung 21 jeweils einzeln in die einzelnen Phasen L1, L2, ... Lp (hier L3) der Ausgangswechselspannung U_{L1...Lp} der Last 8 um. Hierzu steuert die Steuereinrichtung 21 die Schalter 12 des Matrixkonverter 7 in Abhängigkeit von den jeweils momentanen gemessenen Betriebsgrößen an, um die n Phasen P1, P2, ... Pn der Sekundärwechselspannung U_{sec1...n} des Mehrphasen-Transformators 4 jeweils abwechselnd mit den p Phasen L1-Lp der Last 8 zu verbinden und die erforderlichen Kommutierungen zwischen den Schaltern 12 innerhalb einer jeweiligen Gruppe 14, 16, 17 von Schaltern 12 sowie zwischen den Gruppen 14, 16, 17 zu bewirken, um die Phasen P1-Pn der Sekundärwechselspannung U_{sec1...n} in die Ausgangs-wechselspannung U_{L1...Lp} mit den Phasen L1, L2, ... Lp der Last 8 umzuwandeln.

Die Kombination aus dem Mehrphasen-Transformator 4 und dem Matrixkonverter 7 ist in vielerlei Hinsicht vorteilhaft. Der Matrix-Transformator 4 ermöglicht es, mit einfachen Mitteln die erforderliche vielphasige Spannung für den Matrixkonverter 7 bereitzustellen. Er kann die in herkömmlichen Systemen hierzu verwendeten speziellen Generatoren, die eine Turbine oder einen anderen mechanischen Antrieb erfordern und einen aufwändigen, kostspieligen Aufbau haben, ersetzen. Vorteilhafterweise kann der Mehrphasen-Transformator 4 mit dem ohnehin häufig benötigten Netztransformator kombiniert werden oder diesen ersetzen und somit beide Funktionen erfüllen.

Der Matrixkonverter 7 kann mit Thyristoren besonders einfach und kostengünstig implementiert werden. Der Matrixkonverter 7 zeichnet sich gegenüber anderen Umrichtertopologien, die induktive oder kapazitive Zwischenspeicherelemente benötigen, durch niedrigere Leistungsverluste und geringere Kosten für die Anschaffung und den Betrieb aus.

Die Kombination aus dem Matrix-Transformator 4 und dem Matrixkonverter 7 kann für die jeweilige Anwendung spezifisch optimiert werden. Sie ist für beliebige Leistungs- und Spannungsanforderungen beliebig skalierbar.

Im Rahmen der Erfindung sind zahlreiche Modifikationen möglich. Bspw. kann die Anzahl der Phasen auf der Primärseite 3 (entsprechend der Anzahl der Phasen der Wechselspannungsquelle 2) und der Sekundärseite 6 des Mehrphasen-Transformators 4, wie auch die Anzahl der Phasen am Ausgang am des Matrixkonverters 7 (entsprechend der Anzahl p der Phasen der Last 8) beliebig gewählt werden. Der Mehrphasen-Transformator 4 kann insofern eine beliebige Anzahl an Primärspulen 31 und Sekundärspulen 38 aufweisen. Der Kern 32 des Mehrphasen-Transformators 4 kann drei, sechs oder auch mehr als sechs Schenkel 33, vorzugsweise eine doppelte Anzahl von Schenkeln als Anzahl der Phasen der Wechselspannungsquelle 2 aufweisen. Der Kern 32 könnte auch ringförmig mit ringförmigen Jochen 34, 36 gestaltet sein, zwischen denen die Schenkel 33 längs des Umfangs gleichmäßig verteilt angeordnet sein können, um einen symmetrischen Kern zu bilden. Dadurch können im Wesentlichen gleiche Flusswege erzielt werden, die eine äußerst effiziente Magnetflussverteilung ermöglichen.

Der Matrixkonverter 7 ist in bevorzugter Weise mit einer einzigen Umwandlungsstufe in Form der (n x p)-Matrix der Schalter 12 veranschaulicht. Er könnte aber auch mehrstufig ausgebildet sein, wie bspw. in der WO 2006/103155 A1 beschrieben, um die Gesamtanzahl der Schalter 12 zu reduzieren. Während die Schalter 12 hier zu Blöcken 14, 16, 17 gruppiert sind, die jeweils einer der Phasen der Last 8 zugeordnet sind, könnten auch andere Gruppierungen oder Teilumrichter gebildet werden, wie bspw. in der DE 10 2009 042 690 A1 offenbart, um bspw. die Schalter 12 der einzelnen Blöcke symmetrisch mit dem Mehrphasen-Transformator 4 zu verbinden.

Eine optionale Weiterbildung der Vorrichtung 11 ist ferner in Fig. 1 angezeigt. Wie daraus ersichtlich, kann der Mehrphasen-Transformator 4 auf seiner Sekundärseite 6 zusätzlich eine weitere Wicklung 47 aufweisen, an die bspw. eine kapazitive oder induktive Blindleistungskompensationseinrichtung angeschlossen werden kann, die in Fig. 1 durch einen Block 48 schematisch dargestellt ist. Die weitere Wicklung 47 kann dann als Kompensationswicklung bezeichnet werden. Alternativ kann der Block 48 auch ein harmonisches Filter zur Kompensation von Oberschwingungen darstellen, das über die weitere Wicklung 47 angeschlossen ist, die dann als Filterwicklung 47 bezeichnet werden kann. Vorteilhafterweise kann ein einziger Mehrphasen-Transformator 4 dann all die vielfältigen Funktionen erfüllen, nämlich als Netztransformator dienen, um die Spannungspegel zwischen dem HV-Netz 2 und den angeschlossenen Verbrauchern anzupassen, die Mehrphasen-Wechselspannung für den Matrixkonverter 7 mit einer hohen Phasenordnung zur Verfügung stellen und als Schnittstelle zur Kompensation von Blindleistung und/oder Oberschwingungen dienen. Dies minimiert den Aufwand und die Kosten sowohl für die Realisierung als auch den Betrieb.

Es ist eine Vorrichtung 11 zur Umwandlung elektrischer Energie, insbesondere für Hochleistungsanwendungen, geschaffen die auf einer Kombination aus einem Mehrphasen-Transformator 4 und einem Matrixkonverter 7 beruht. Der Mehrphasen-Transformator 4 weist eine Primärseite 3 zur Verbindung mit einer m-phasigen Wechselspannungsquelle 2, z.B. einem Hochspannungsnetz, und eine mit der Primärseite 3 magnetisch gekoppelte Sekundärseite 6 auf, die eine Sekundärwechselspannung U_{sec1...n} mit n Phasen P1-Pn abgibt oder erhält. Der Matrixkonverter 7 ist zur Verbindung der Sekundärseite 6 des Mehrphasen-Transformators (4) mit einer p-phasigen Last (8) vorgesehen und weist eine Vielzahl von steuerbaren bidirektionalen Schaltern 12 auf, die in einer Matrix angeordnet sind, die eingerichtet ist, um die n Phasen P1-Pn der Sekundärwechselspannung U_{sec1...n} des Mehrphasen-Transformators 4 jeweils abwechselnd mit den p Phasen L1-Lp der Last 8 zu verbinden. Die Anzahl n der Phasen P1-Pn der Sekundärwechselspannung U_{sec1...n} des Mehrphasen-Transformators ist deutlich größer als die Anzahl m der Phasen der Wechselspannungsquelle 2 (n > m) und die Anzahl p der Phasen L1-Lp der Last 8 (n > p). Die bidirektionalen Schalter 12 des Matrixkonverters 7 werden in Abhängigkeit von erfassten momentanen Betriebsbedingungen und nach einem vorgegebenen Schaltschema einzeln angesteuert, um die n Phasen P1-Pn der Sekundärwechselspannung U_{sec1...n} in eine Ausgangswechselspannung U_{L1...Lp} mit den p Phasen L1-Lp der Last 8 umzuwandeln. Ein System 1 zur Bereitstellung elektrischer Energie mit einer derartigen Umwandlungsvorrichtung 11 ist ebenfalls offenbart.

## Patentansprüche

1. Vorrichtung (11) zur Umwandlung elektrischer Energie, insbesondere für Hochleistungsanwendungen,
mit einem Mehrphasen-Transformator (4), der eine Primärseite (3) zur Verbindung mit einer m-phasigen Wechselspannungsquelle (2) und eine mit der Primärseite (3) magnetisch gekoppelte Sekundärseite (6) aufweist oder erhält, die eine Sekundärwechselspannung (U_{sec1...n}) mit n Phasen (P1-Pn) abgibt, wobei die Anzahl m der Phasen der Wechselspannungsquelle (2) drei oder mehr beträgt (m >= 3) und die Anzahl n der Phasen (P1-Pn) der Sekundärwechselspannung (U_{sec1...n}) größer als m ist (n > m) ;
mit einem Matrixkonverter (7) zur Verbindung der Sekundärseite (6) des Mehrphasen-Transformators (4) mit einer p-phasigen Last (8), wobei der Matrixkonverter (7) eine Vielzahl von steuerbaren bidirektionalen Schaltern (12) aufweist, die in einer Matrix angeordnet sind, die eingerichtet ist, um die n Phasen (P1-Pn) der Sekundärwechselspannung (U_{sec1...n}) des Mehrphasen-Transformators (4) jeweils abwechselnd mit den p Phasen (L1-Lp) der Last (8) zu verbinden, wobei die Anzahl p der Phasen (L1-Lp) der Last (8) kleiner als die Anzahl n der Phasen (P1-Pn) der Sekundärwechselspannung (U_{sec1...n}) ist (p < n) ; und
mit einer Steuereinrichtung (21) zur Steuerung des Betriebs der Vorrichtung (11), die eingerichtet ist, um die steuerbaren bidirektionalen Schalter (12) einzeln anzusteuern, um die n Phasen (P1-Pn) der Sekundärwechselspannung (U_{sec1...n}) in eine Ausgangswechselspannung (U_{L1...Lp}) mit den p Phasen (L1-Lp) der Last (8) umzuwandeln;
**dadurch gekennzeichnet, dass**
der Mehrphasen-Transformator (4) Primärwicklungen (31a-31f), die durch sternverbundene und/oder dreieckverbundene Primärspulen gebildet und zum Anschluss an die m-phasige Wechselspannungsquelle (2), insbesondere ein m-phasiges Hochspannungsnetz, angepasst sind, und eine polygonale Sekundärwicklung (37) aufweist, die mehrere in Reihe verbundene Sekundärspulen (38) aufweist, die jeweils auf die Primärspulen (31a-31f) verteilt und eingerichtet sind, um die n Phasen (P1-Pn) der Sekundärwechselspannung (U_{sec1...n}) zur Verfügung zu stellen;
wobei jede Phase (P1-Pn) der Sekundärwechselspannung (U_{sec1...n}) aus einer Reihenschaltung von wenigstens zwei Sekundärspulen (38), die über verschiedenen Primärspulen (31a-31f) angeordnet sind, abgeleitet ist.

2. Vorrichtung nach Anspruch 1, wobei die Wechselspannungsquelle (2) m=3 Phasen aufweist, die Ausgangswechselspannung (U_{L1...Lp}) der Last (8) p=3 Phasen (L1-L3) aufweist und die Anzahl n der Phasen (P1-Pn) der Sekundärwechselspannung (U_{sec1...n}) des Mehrphasen-Transformators (4) wenigstens 6 beträgt.

3. Vorrichtung nach Anspruch 1 oder 2, wobei die Sekundärwechselspannung (U_{sec1...n}) des Mehrphasen-Transformators (4) 9, 12, 15, 18, 21, 24, 27 oder mehr Phasen (P1-Pn) aufweist.

4. Vorrichtung nach einem beliebigen der vorhergehenden Ansprüche, wobei der Matrixkonverter (7) eine einzige Umwandlungsstufe (14, 16, 17) mit einer (n x p) - Matrix von steuerbaren bidirektionalen Schaltern (12) aufweist.

5. Vorrichtung nach einem beliebigen der vorhergehenden Ansprüche, wobei die bidirektionalen Schalter (12) jeweils antiparallel geschaltete Thyristoren (13), vorzugsweise zwei Reihenschaltungen von gegensinnig parallel geschalteten Thyristoren aufweisen.

6. Vorrichtung nach Anspruch 1, wobei die Sekundärspulen (38) jeweils eine Anzahl von Windungen aufweisen, die in Bezug aufeinander und auf die Windungszahl der zugehörigen Primärspule (31a-31f) ausgewählt sind, um über der Reihenverbindung der zwei Sekundärspulen (38) eine bestimmte der Phasen (P1-Pn) der Sekundärwechselspannung (U_{sec1...n}) zu erhalten.

7. Vorrichtung nach einem beliebigen der vorhergehenden Ansprüche, wobei der Mehrphasen-Transformator (4) einen Kern (32) mit einer zu der Anzahl m der Phasen der Wechselspannungsquelle (2) doppelten Anzahl an Schenkeln (33a-33f) aufweist, wobei jeder Phase der Wechselspannungsquelle (2) ein erster und ein zweiter Schenkel (33a, 33b; 33c, 33d; 33e, 33f) zugeordnet sind, wobei um jeden Schenkel (33a-33f) jeweils eine der Primärspulen (31a-31f) herum gewickelt ist, die Primärspulen (31a, 31c, 31e) der ersten Schenkel (33a, 33c, 33e) aller Phasen der Wechselspannungsquelle (2) sternförmig miteinander verbunden sind, die Primärspulen (31b, 31d, 31f) der zweiten Schenkel (33b, 33d, 33f) aller Phasen der Wechselspannungsquelle (2) dreieckverbunden sind und um jede Primärspule (31a-31f) herum mehrere Sekundärspulen (38) gewickelt sind.

8. Vorrichtung nach einem beliebigen der vorhergehenden Ansprüche, wobei der Mehrphasen-Transformator (4) auf seiner Sekundärseite (6) ferner eine Kompensations- und/oder Filterwicklung (47) aufweist, an die eine kapazitive oder induktive Blindleistungskompensationseinrichtung (48) oder ein harmonisches Filter (48) zur Kompensation von Oberschwingungen anschließbar ist.

9. Vorrichtung nach einem beliebigen der vorhergehenden Ansprüche, wobei Sensormittel (26) vorgesehen sind, um eine oder mehrere der Betriebsgrößen zu erfassen, zu denen Sekundärströme und/oder Sekundärwechselspannungen auf der Sekundärseite (6) des Mehrphasen-Transformators (4), an die Last (8) gelieferte Ausgangs-Wechselströme und/oder Ausgangs-Wechselspannungen und Zustände der bidirektionalen Schalter (12) gehören, und hierfür kennzeichnende Sensorsignale zu liefern, und die Steuereinrichtung (21) eingerichtet ist, um die bidirektionalen Schalter (12) des Matrixkonverters (7) basierend auf den empfangenen Sensorsignalen (26) geeignet anzusteuern.

10. System zur Bereitstellung elektrischer Energie
mit einer mehrphasigen Wechselspannungsquelle (2), insbesondere einem dreiphasigen Hochspannungsnetz;
mit einer mehrphasigen, vorzugsweise dreiphasigen Last (8); und
mit einer Vorrichtung (11) nach einem beliebigen der vorhergehenden Ansprüche, die über den Mehrphasen-Transformator (4) an die mehrphasige Wechselspannungsquelle (2) angeschlossen und über den Matrixkonverter (7) mit der mehrphasigen Last (8) verbunden ist, um diese mit mehrphasiger Wechselspannungs-Energie zu versorgen.

11. System nach Anspruch 10, wobei die Last (8) eine Energiesenke und/oder Energiequelle ist, die aus einer passiven Last, einem Motor, einem Generator, einem Stromrichter oder einem Wechselspannungsnetz ausgewählt ist.

12. Verwendung einer Vorrichtung nach einem beliebigen der Ansprüche 1-9 oder eines Systems nach einem beliebigen der Ansprüche 10-11 zur Bereitstellung hoher Leistungen im MW-Bereich für elektrische Antriebseinrichtungen oder -ketten, Back-to-Back-Netzkupplungen oder 50Hz-60Hz-Frequenzumrichter.

## Claims

1. A device (11) for converting electrical energy, in particular for high-power applications, comprising
a multi-phase transformer (4) having or receiving a primary side (3) for connection to an m-phase AC voltage source (2) and a secondary side (6) magnetically coupled to the primary side (3) and outputting a secondary AC voltage (U_{sec1...n}) with n phases (P1-Pn), wherein the number m of the phases of the AC voltage source (2) is 3 or more (m >= 3) and the number n of the phases (P1-Pn) of the secondary AC voltage (U_{sec1...n}) is greater than m (n > m) ;
a matrix converter (7) for connecting the secondary side (6) of the multi-phase transformer (4) to a p-phase load (8), the matrix converter (7) comprising a plurality of controllable bidirectional switches (12) which are arranged in a matrix which is set up to alternately connect the n phases (P1-Pn) of the secondary AC voltage (U_{sec1...n}) of the multi-phase transformer (4) with the p phases (L1-Lp) of the load (8), wherein the number p of the phases (L1-Lp) of the load (8) is smaller than the number n of the phases (P1-Pn) of the secondary AC voltage (U_{sec1...n}) (p < n) ; and
a control device (21) for controlling the operation of the device (11) and configured to control the controllable bidirectional switches (12) individually in order to convert the n phases (P1-Pn) of the secondary AC voltage (U_{sec1...n}) into an AC output voltage (U_{L1...Lp}) having the p phases (L1-Lp) of the load (8);
**characterized in that**
the multi-phase transformer (4) comprises primary windings (31a-31f) formed by star-connected and/or delta-connected primary coils and adapted for connection to an m-phase AC voltage source (2), in particular an m-phase high-voltage network, and a polygonal secondary winding (37) which has a plurality of secondary coils connected in series, which are each distributed to the primary coils (31a-31f) and are configured to provide the n phases (P1-Pn) of the secondary AC voltage (U_{sec1...n});
wherein each phase (P1-Pn) of the secondary AC voltage (U_{sec1...n}) is derived from a series connection of at least two secondary coils (38) which are arranged over different primary coils (31a-31f).

2. The device according to claim 1, wherein the AC voltage source (2) has m = 3 phases, the AC output voltage (U_{L1...Lp}) of the load (8) has p = 3 phases (L1-L3) and the number n of the phases (P1-Pn) of the secondary AC voltage (U_{sec1...n}) of the multi-phase transformer (4) is at least 6.

3. The device according to claim 1 or 2, wherein the secondary AC voltage (U_{sec1...n}) of the multi-phase transformer (4) has 9, 12, 15, 18, 21, 24, 27 or more phases (P1-Pn).

4. The device according to anyone of the preceding claims, wherein the matrix converter (7) comprises a single conversion stage (14, 16, 17) with an (n x p) matrix of controllable bidirectional switches (12).

5. The device according to anyone of the preceding claims, wherein the bidirectional switches (12) each comprise thyristors (13) connected in anti-parallel, preferably two series connections of thyristors connected in parallel in opposite directions.

6. The device according to claim 1, wherein the secondary coils (38) each have a number of windings selected in relation to one another and to the number of windings of the associated primary coil (31a-31f) in order to obtain a particular one of the phases (P1-Pn) of the secondary AC voltage (U_{sec1...n}) over the series connection of the two secondary coils (38).

7. The device according to anyone of the preceding claims, wherein the multi-phase transformer (4) comprises a core (32) with a number of legs (33a-33f) that is double the number m of the phases of the AC voltage source (2), each phase of the AC voltage source (2) being assigned a first and a second leg (33a, 33b; 33c, 33d; 33e, 33f), wherein each leg (33a-33f) has a respective one of the primary coils (31a-31f) wound therearound, the primary coils (31a, 31c, 31e) of the first leg (33a, 33c, 33e) of all phases of the AC voltage source (2) are star-connected to one another, the primary coils (31b, 31d, 31f) of the second legs (33b, 33d, 33f) of all phases of the AC voltage source (2) are delta-connected and each primary coil (31a-31f) has a plurality of secondary coils (38) wound therearound.

8. The device according to anyone of the preceding claims, wherein the multi-phase transformer (4) further comprises on its secondary side (6) a compensation and/or filter winding (47) to which a capacitive or inductive reactive power compensation device (48) or a harmonic filter (48) can be connected to compensate for harmonics.

9. The device according to anyone of the preceding claims, wherein sensor means (26) are provided to detect one or more of the operating parameters that include secondary currents and/or secondary AC voltages on the secondary side (6) of the multi-phase transformer (4), AC output currents and/or AC output voltages supplied to the load (8) and states of the bidirectional switches (12), and to provide characteristic sensor signals therefor, and the control device (21) is configured to control the bidirectional switches (12) of the matrix converter (7) appropriately based on the received sensor signals (26).

10. A system for providing electrical energy comprising a multi-phase AC voltage source (2), in particular a three-phase high-voltage network;
a multi-phase, preferably three-phase load (8); and
a device (11) according to anyone of the preceding claims, which is connected to the multi-phase AC voltage source (2) via the multi-phase transformer (4) and to the multi-phase load (8) via the matrix converter (7) to supply them with multi-phase AC voltage energy.

11. The system according to claim 10, wherein the load (8) is an energy sink and/or an energy source selected from a passive load, a motor, a generator, a converter or an AC voltage network.

12. Use of a device according to anyone of the claims 1-9 or a system according to anyone of the claims 10-11 for providing high powers in the MW range for electric drive devices or chains, back-to-back network couplings or 50 Hz to 60 Hz frequency converters.

## Revendications

1. Dispositif (11) de conversion d'énergie électrique, en particulier pour des applications haute puissance,
comprenant un transformateur polyphasé (4) qui présente ou reçoit un côté primaire (3), destiné au raccordement à une source de tension alternative (2) à m phases, et un côté secondaire (6) qui est couplé du point de vue magnétique au côté primaire (3) et délivre une tension alternative secondaire (U_{sec1...n}) avec n phases (P1 à Pn), le nombre m des phases de la source de tension alternative (2) étant de trois ou plus (m >= 3), et le nombre n des phases (P1 à Pn) de la tension alternative secondaire (U_{sec1...n}) étant supérieur à m (n > m) ;
comprenant un convertisseur matriciel (7) destiné à raccorder le côté secondaire (6) du transformateur polyphasé (4) à une charge (8) à p phases, le convertisseur matriciel (7) présentant une pluralité de commutateurs bidirectionnels (12) contrôlables qui sont disposés dans une matrice, laquelle est conçue pour relier les n phases (P1 à Pn) de la tension alternative secondaire (U_{sec1...n}) du transformateur polyphasé (4) respectivement en alternance aux p phases (L1 à Lp) de la charge (8), le nombre p des phases (L1 à Lp) de la charge (8) étant inférieur au nombre n des phases (P1 à Pn) de la tension alternative secondaire (U_{sec1...n}) (p < n) ;
comprenant un dispositif de commande (21) qui est destiné à commander le fonctionnement du dispositif (11) et est conçu pour activer individuellement les commutateurs bidirectionnels (12) contrôlables, afin de convertir les n phases (P1 à Pn) de la tension alternative secondaire (U_{sec1...n}) en une tension alternative de sortie (U_{L1...Lp}) avec les phases p (L1 à Lp) de la charge (8) ;
**caractérisé en ce que**
le transformateur polyphasé (4) présente des enroulements primaires (31a à 31f), qui sont constitués de bobines primaires reliées en étoile et/ou reliées en triangle et sont destinés au raccordement à la source de tension alternative (2) à m phases, notamment un réseau haute tension à m phases, et un enroulement secondaire (37) polygonal qui comporte plusieurs bobines secondaires (38) montées en série, qui sont réparties respectivement sur les bobines primaires (31a à 31f) et sont conçues pour mettre à disposition les n phases (P1 à Pn) de la tension alternative secondaire (U_{sec1...n}) ;
chaque phase (P1 à Pn) de la tension alternative secondaire (U_{sec1...n}) étant dérivée d'un montage en série d'au moins deux bobines secondaires (38) qui sont disposées au-dessus de différentes bobines primaires (31a à 31f).

2. Dispositif selon la revendication 1, dans lequel la source de tension alternative (2) présente m=3 phases, la tension alternative de sortie (U_{L1...Lp}) de la charge (8) présente p=3 phases (L1 à L3), et le nombre n des phases (P1 à Pn) de la tension alternative secondaire (U_{sec1...n}) du transformateur polyphasé (4) est au moins de 6.

3. Dispositif selon la revendication 1 ou 2, dans lequel la tension alternative secondaire (U_{sec1...n}) du transformateur polyphasé (4) présente 9, 12, 15, 18, 21, 24, 27 ou plus de phases (P1 à Pn).

4. Dispositif selon l'une quelconque des revendications précédentes, dans lequel le convertisseur matriciel (7) présente un seul étage de conversion (14, 16, 17) avec une matrice (n x p) de commutateurs bidirectionnels (12) contrôlables.

5. Dispositif selon l'une quelconque des revendications précédentes, dans lequel les commutateurs bidirectionnels (12) présentent respectivement des thyristors (13) couplés de manière antiparallèle, de préférence deux montages en série de thyristors branchés en parallèle dans des sens opposés.

6. Dispositif selon la revendication 1, dans lequel les bobines secondaires (38) présentent chacune un nombre de spires qui sont sélectionnés les uns par rapport aux autres et par rapport au nombre de spires de la bobine primaire (31a à 31f) associée, afin d'obtenir une phase précise des phases (P1 à Pn) de la tension alternative secondaire (U_{sec1...n}) au-dessus du montage en série des deux bobines secondaires (38).

7. Dispositif selon l'une quelconque des revendications précédentes, dans lequel le transformateur polyphasé (4) présente un noyau (32) comportant un nombre de branches (33a à 33f) qui correspond au double du nombre m des phases de la source de tension alternative (2), une première et une deuxième branche (33a, 33b ; 33c, 33d ; 33e, 33f) étant associées à chaque phase de la source de tension alternative (2), sachant que l'une des bobines primaires (31a à 31) est enroulée autour de chaque branche (33a à 33f), que les bobines primaires (31a, 31c, 31e) des premières branches (33a, 33c, 33e) de toutes les phases de la source de tension alternative (2) sont reliées en forme d'étoile entre elles, que les bobines primaires (31b, 31d, 31f) des deuxièmes branches (33b, 33d, 33f) de toutes les phases de la source de tension alternative (2) sont reliées en forme de triangle entre elles, et que plusieurs bobines secondaires (38) sont enroulées autour de chaque bobine primaire (31a à 31f).

8. Dispositif selon l'une quelconque des revendications précédentes, dans lequel le transformateur polyphasé (4) présente en outre, sur son côté secondaire (6), un enroulement de compensation et/ou de filtrage (47) auquel peut être raccordé un dispositif de compensation de puissance réactive (48) capacitif ou inductif ou un filtre d'harmoniques (48) destiné à la compensation d'harmoniques.

9. Dispositif selon l'une quelconque des revendications précédentes, dans lequel il est prévu des moyens formant capteurs (26) destinés à mesurer une ou plusieurs grandeurs de fonctionnement qui englobent les courants secondaires et/ou les tensions alternatives secondaires, côté secondaire (6) du transformateur polyphasé (4), les courants alternatifs de sortie et/ou les tensions alternatives de sortie délivrés à la charge (8), et les états des commutateurs bidirectionnels (12), et destinés à fournir des signaux de capteur caractérisant ces grandeurs, et dans lequel le dispositif de commande (12) est conçu pour activer les commutateurs bidirectionnels (12) du convertisseur matriciel (7) de manière appropriée, sur la base des signaux de capteur (26) reçus.

10. Système de mise à disposition d'énergie électrique,
comprenant une source de tension alternative (2) polyphasée, en particulier un réseau haute tension triphasé ;
comprenant une charge (8) polyphasée, de préférence triphasée ; et comprenant un dispositif (11) selon l'une quelconque des revendications précédentes, qui est raccordé à la source de tension alternative (2) polyphasée, par l'intermédiaire du transformateur polyphasé (4), et est relié à la charge (8) polyphasée par l'intermédiaire du transformateur polyphasé (4), afin d'alimenter celle-ci en énergie à tension alternative polyphasée.

11. Système selon la revendication 10, dans lequel la charge (8) est un puits d'énergie et/ou une source d'énergie qui est choisie parmi une charge passive, un moteur, un générateur, un convertisseur de courant ou un réseau à tension alternative.

12. Utilisation d'un dispositif selon l'une quelconque des revendications 1 à 9 ou d'un système selon l'une quelconque des revendications 10 à 11, à des fins de mise à disposition de hautes puissances, dans le domaine MW, pour des dispositifs ou des chaînes d'entraînement électriques, des interconnexions de réseaux adossés ou des convertisseurs de fréquence 50 Hz - 60 Hz.
